# EUROPÄISCHE PATENTSCHRIFT

(11) **EP 2 828 932 B1**
(45) Veröffentlichungstag und Bekanntmachung des Hinweises auf die Patenterteilung: **10.05.2017**
(21) Anmeldenummer: 13709183.1
(22) Anmeldetag: 11.03.2013
(51) Int. Cl.: F01N 13/00, F01N 3/20, F01N 3/027, B01J 35/04, H01R 4/30, H01R 11/28, H01R 13/58, H01R 39/60, H05B 3/06, H05B 3/42

(54) **VERDREHSICHERER ELEKTRISCHER ANSCHLUSS, INSBESONDERE FÜR EINEN ELEKTRISCH BEHEIZBAREN WABENKÖRPER**
ELECTRICAL CONNECTION SECURED AGAINST ROTATION, IN PARTICULAR FOR AN ELECTRICALLY HEATABLE HONEYCOMB BODY
RACCORDEMENT ÉLECTRIQUE ANTI-ROTATION, EN PARTICULIER DESTINÉ À UN ÉLÉMENT ALVÉOLÉ POUVANT ÊTRE CHAUFFÉ ÉLECTRIQUEMENT

(30) Priorität: 21.03.2012 DE 102012005786
(43) Veröffentlichungstag der Anmeldung: 28.01.2015
(73) Patentinhaber: Continental Automotive GmbH, 30165 Hannover (DE)
(72) Erfinder: HIRTH, Peter, 51503 Rösrath (DE); HÄRIG, Thomas, 53819 Neunkirchen-Seelscheid (DE); KURTH, Ferdi, 53894 Mechernich (DE)
(86) Internationale Anmeldenummer: PCT/EP2013/054806
(87) Internationale Veröffentlichungsnummer: WO 2013/139633

(56) Entgegenhaltungen:
- EP-A2- 0 716 558
- EP-A2- 1 638 171
- DE-A1- 19 627 840
- DE-U1- 9 320 985
- US-A1- 2004 062 622

## Beschreibung

Die vorliegende Erfindung betrifft das Gebiet der elektrischen Komponenten in einem Abgassystem eines Verbrennungsmotors, insbesondere eines Kraftfahrzeugs. Moderne Abgasreinigungsanlagen enthalten häufig auch elektrische Komponenten, deren Zuleitungen elektrisch isoliert von außen in das Abgassystem geführt werden müssen. Insbesondere bei Komponenten, die relativ hohe Ströme erfordern, beispielsweise elektrisch beheizbaren Wabenkörpern und dergleichen, wird ein relativ massiver elektrischer Anschluss benötigt, damit genügend hohe Ströme hindurchgeführt werden können.

Ein typischer elektrisch beheizbarer Wabenkörper ist aus der EP 0 783 621 B1 bekannt. Ein solcher Wabenkörper hat mindestens einen elektrischen Anschluss, der bisher im Wesentlichen rotationssymmetrisch ausgebildet ist.

Aus der WO 97/47057 ist auch die spezielle Ausbildung eines solchen Anschlusses mit einem elektrischen Leiter und einer Durchführung, von der der elektrische Leiter mittels einer Isolierschicht elektrisch isoliert ist, bekannt. Der elektrische Leiter weist einen äußeren Verbindungsabschnitt mit einer Kontaktfläche zur Verbindung mit einem Anschlussstück einer Zuführleitung auf, wobei in dem beschriebenen Fall der Verbindungsabschnitt leicht konisch ausgestaltet ist. Eine weitere Ausbildung eines solchen Anschlusses ist aus der EP 0 716 558 A bekannt.

Von diesem Stand der Technik geht die vorliegende Erfindung aus. Elektrische Komponenten in einem Abgassystem sind im Betrieb häufig hohen Temperaturen ausgesetzt, was auch für die elektrischen Anschlüsse zutrifft, weil elektrische Leitfähigkeit typischerweise mit guter Wärmeleitfähigkeit einhergeht, so dass selbst die außerhalb eines metallischen Mantels befindlichen Teile eines elektrischen Anschlusses sehr heiß werden können. Dies kann Oxidation und/oder Korrosion von Kontaktflächen oder Gewinden zur Folge haben. Schon beim Befestigen eines Anschlussstücks an einem Verbindungsabschnitt, insbesondere wenn beide konisch gestaltet sind, müssen selbst im Neuzustand bestimmte Kräfte auf den elektrischen Anschluss ausgeübt werden. Sofern innen oder außen an dem elektrischen Anschluss ein koaxiales Gewinde angeordnet ist, müssen beim Festziehen einer Schraube oder Mutter Drehmomente auf den elektrischen Anschluss ausgeübt werden. Hier stellt sich heraus, dass eine rotationssymmetrische Anordnung, bei der ein elektrischer Leiter typischerweise von einer keramischen Isolierschicht, insbesondere verpresstes Keramikpulver, umgeben ist, durch an dem elektrischen Leiter angreifende Drehmomente beschädigt oder sogar gelöst werden kann. Typischerweise ist der elektrische Leiter auch im Inneren des Abgassystems mit einer elektrischen Komponente elektrisch leitend verbunden, insbesondere verschweißt oder verlötet, wobei weder diese Verbindungsstelle noch die elektrische Komponente große Drehmomente aushalten können oder sollen.

Bisher ist es daher üblich, die anzuwendenden Drehmomente bei der Montage zu begrenzen, was jedoch z. B. bei konisch gestalteten Verbindungsabschnitten die Flächenpressung begrenzt. Noch problematischer ist die Situation bei einer späteren Wartung oder anderweitigen Reparatur, bei der der elektrische Anschluss gelöst werden muss. Die hierfür erforderlichen Drehmomente können erheblich höher sein als die bei der Montage, so dass es zur Beschädigung der elektrischen Komponente oder der Durchführung bzw. der elektrischen Isolierung kommen kann.

Aufgabe der vorliegenden Erfindung ist es, einen einfach aufgebauten elektrischen Anschluss zu schaffen, der die beschriebenen Probleme vermeidet oder verringert und insbesondere auch erlaubt, empfindliche Komponenten, die keine großen Drehmomente aushalten können im Inneren eines Abgassystems mit hohen elektrischen Strömen zu versorgen.

Zur Lösung dieser Aufgabe dient ein elektrischer Anschluss gemäß dem unabhängigen Anspruch 1 oder dem unabhängigen Anspruch 2. Vorteilhafte Ausgestaltungen sind in den abhängigen Ansprüchen angegeben, wobei diese Ausgestaltungen einzeln oder in technisch sinnvollen Kombinationen eingesetzt werden können. Weiterhin können die Merkmale der Ansprüche auch mit Merkmalen der Beschreibung kombiniert werden und weitere Ausführungsformen der Erfindung definieren.

Die erfindungsgemäßen Varianten gehen von dem (gleichen) Gedanken aus, dass notwendige Drehmomente bei Montage, Demontage und Betrieb außen auf den elektrischen Anschluss ausgeübt werden können, ohne dass dabei die Durchführung oder die elektrische Komponente im Inneren beschädigt werden.

Gemäß einem Aspekt der Erfindung wird die Aufgabe gelöst durch einen elektrischen Anschluss für eine elektrische Komponente in einem Abgassystem eines Verbrennungsmotors, insbesondere einen elektrisch beheizbaren Wabenkörper, wobei das Abgassystem einen metallischen Mantel aufweist, durch den ein elektrischer Leiter durch eine Isolierschicht elektrisch isoliert mittels einer Durchführung mit einer geometrischen Mittelachse hindurchgeführt ist, und wobei der elektrische Leiter einen im Querschnitt kreisrunden, äußeren Verbindungsabschnitt mit einer Kontaktfläche zur Verbindung mit einem Anschlussstück einer Zuführleitung und/oder ein zur Mittelachse der Durchführung koaxiales Innen- oder Außengewinde aufweist. Die Durchführung so hierbei so gestaltet, dass sie an dem Verbindungsabschnitt und/oder dem Innen- oder Außengewinde in deren Umfangsrichtung angreifende Drehmomente von bis zu 8 Nm (Newtonmeter), vorzugsweise von bis zu 10 Nm, insbesondere bis zu 15 Nm, aufnehmen kann.

Gemäß einem weiteren Aspekt der Erfindung wir die gleiche Aufgabe gelöst, aber in Abhängigkeit von der Größe der Kontaktfläche, das heißt in Abhängigkeit von der typischerweise zu übertragenden Stromstärke. Dies trägt der Tatsache Rechnung, dass es kleinere und größere elektrische Komponenten mit geringerer oder größerer Leistungsaufnahme gibt, so dass die aufzunehmenden Kräfte in Relation zu der Kontaktfläche gesetzt werden. Dementsprechend wird die Aufgabe auch gelöst durch einen elektrischen Anschluss für eine elektrische Komponente in einem Abgassystem eines Verbrennungsmotors, insbesondere einen elektrisch beheizbaren Wabenkörper, wobei das Abgassystem einen metallischen Mantel aufweist, durch den ein elektrischer Leiter durch eine Isolierschicht elektrisch isoliert mittels einer Durchführung hindurchgeführt ist und wobei der elektrische Leiter einen im Querschnitt kreisrunden äußeren Verbindungsabschnitt mit einer Kontaktfläche zur Verbindung mit einem Anschlussstück einer Zuführleitung aufweist, wobei die Durchführung so gestaltet ist, dass sie an dem Verbindungsabschnitt und/oder dem Innen- oder Außengewinde in dessen Umfangsrichtung angreifende Drehmomente von bis zu 3,6 Nm (Newtonmeter) pro cm² (Quadratzentimeter) Kontaktfläche vorzugsweise von bis zu 4,5 Nm/cm², insbesondere bis zu 7 Nm/cm², aufnehmen kann.

Erfindungsgemäß wird die Durchführung bzw. der elektrische Leiter, insbesondere im Bereich der Durchführung, so gestaltet, dass höhere Drehmomente als bisher typischerweise zugelassen aufgenommen werden können. Beschädigungen der Durchführung oder der elektrischen Komponente können so selbst bei Anwendung größerer Drehmomente verhindert werden. Der erfindungsgemässe elektrische Anschluss weist dessen elektrischer Leiter im Bereich der Durchführung Sicherungselemente zur Sicherung gegen Verdrehen auf. Bei einer rotationssymmetrischen Anordnung besteht beim Anwenden großer Drehmomente auf den elektrischen Leiter vor allem das Risiko, dass dieser sich innerhalb der Durchführung in der elektrischen Isolierschicht dreht, wodurch das Drehmoment auf die elektrische Komponente im Inneren übertragen werden und dort Schäden anrichten kann. Es kann daher schon ausreichen, wenn der elektrische Leiter im Bereich der Durchführung mit Mitteln zur Sicherung gegen Verdrehen ausgestattet wird.

Eine geeignete Lösung besteht gemäß der Erfindung darin, dass der elektrische Leiter im Bereich der Durchführung einen von der Kreisform abweichenden Außenquerschnitt aufweist, insbesondere eine ovale oder mehreckige Querschnittsform. Bei dieser Ausführungsform werden viel höhere Kräfte für ein Verdrehen benötigt, weil zumindest ein Teil der Isolierschicht beim Verdrehen mitgenommen werden müsste. Schon ein von der Kreisform abweichender Außenquerschnitt des elektrischen Leiters ohne sonstige Veränderungen an der Durchführung erzielt einen erheblichen Effekt. Dieser wird natürlich verstärkt, wenn auch die Durchführung selbst innen eine entsprechende von der Kreisform abweichende Querschnittsform hat.

Ein weiteres Ausführungsbeispiel, welches die Aufnahme erheblicher Drehmomente zulässt, ist die Gestaltung des elektrisches Leiters unabhängigen von seiner allgemeinen Querschnittsform mit einer außen angebrachten Struktur, insbesondere einer in seiner Längsrichtung und/oder schräg dazu verlaufenden Struktur, insbesondere Nuten, Rillen, Rippen und/oder Erhebungen. Auf diese Weise wird die Haftung in der Isolierschicht erheblich erhöht, insbesondere wenn Erhebungen, beispielsweise Rippen, in die Isolierschicht hineinragen. Erfindungsgemäss dient die Durchführung in ihrer Form und/oder inneren Oberflächenstruktur als Gegenstück zu dem entsprechenden Bereich des elektrischen Leiters und ist von diesem durch eine keramische Isolierschicht, insbesondere verpresstes Keramikpulver, elektrisch isoliert. Bei dieser Ausgestaltung entsteht eine Art durch das gepresste Keramikpulver übertragener Formschluss, der ein Verdrehen selbst bei großem Drehmoment nahezu ausschließt.

Unabhängig von den Querschnittsformen von Leiter und Durchführung können auch Systeme, die nach dem Prinzip von Nut und Feder zusammenwirken, angewendet werden. So kann der elektrische Leiter im Bereich der Durchführung mindestens eine nach dem Prinzip Nut und Feder mit der Durchführung zusammenwirkende Struktur in Längsrichtung aufweisen.

Ein anderer Aspekt der Erfindung ist, dass der elektrische Leiter neben den bisher beschriebenen Eigenschaften auch gasdicht nach außen geführt werden muss. Die Gasdichtigkeit kann dadurch verbessert werden, dass der elektrische Leiter im Bereich der Durchführung mindestens eine in Umfangsrichtung verlaufende Struktur aufweist, die vorzugsweise mit einer entsprechenden Gegenstruktur der Durchführung zusammenwirkt. Diese Gestaltung führt nicht nur zu einer Art Labyrinthdichtung, sondern vergrößert auch die Reibungsflächen zwischen elektrischem Leiter und Isolierschicht, wodurch gleichzeitig das aufzunehmende Drehmoment erhöht wird. Eine oder mehrere aufeinanderfolgende solcher Strukturen erhöhen daher gleichzeitig die Gasdichtheit der Durchführung und die Verdrehsicherheit.

Die beschriebenen erfindungsgemäßen Ausführungsformen eignen sich besonders für einen elektrischen Anschluss mit einem konisch gestalteten Verbindungsabschnitt, der so mit einem entsprechend gestalteten Anschlussstück selbsthemmend zusammengesteckt werden kann. Zur Ausgestaltung solcher selbsthemmenden Verbindungen wird vollumfänglich auf die diesbezüglichen Ausführungen der WO 97/47057 verwiesen, die zur Erläuterungen hier mit herangezogen werden können.

Um einen solchen Verbindungsabschnitt mit dem Anschlussstück zusammenzupressen, kann der elektrische Leiter oberhalb des konischen Verbindungsabschnitts ein Außengewinde aufweisen, auf das eine Mutter zum Festziehen des Anschlussstücks gedreht werden kann.

Die Erfindung ermöglicht das Anwenden größerer Drehmomente und damit größerer Flächenpressungen bei gleicher Konizität des Verbindungsabschnitts gegenüber herkömmlichen Systemen und erlaubt vor allem auch eine Demontage selbst bei oxidiertem Gewinde oder Verbindungsabschnitt, ohne dass die elektrische Komponente dabei beschädigt wird.

Das gleiche gilt, wenn der elektrische Leiter ein Innengewinde aufweist, auf welches eine Schraube mit einem Kopf zum Festziehen des Anschlussstücks gedreht werden kann.

Als Ergänzung oder als Ersatz für die bisher beschriebenen Ausführungsformen der Erfindung kann nach einem anderen Aspekt der Erfindung an dem elektrischen Leiter (oberhalb der Durchführung) ein Gegenhaltemittel vorgesehen werden, welches ein Verdrehen des elektrischen Leiters in der Durchführung durch Gegenhalten mit einem geeigneten Werkzeug (Aufbringen eines Gegendrehmoments) verhindern hilft. Im einfachsten Fall kann es sich um einen im Querschnitt mehrkantigen, vorzugsweise sechskantigen, Abschnitt des elektrischen Leiters handeln, an dem ein Schraubenschlüssel oder ein ähnliches Werkzeug zum Gegenhalten angreifen kann. Gegenhalten bedeutet hier das Aufbringen eines einem an dem elektrischen Leiter angreifenden Drehmoment entgegenwirkenden zweiten Drehmomentes.

Die Erfindung findet insbesondere Anwendung bei einem Kraftfahrzeug mit einem Verbrennungsmotor und einem in dem Abgassystem integrierten, elektrisch beheizbaren Wabenkörper.

Weitere Einzelheiten und Vorteile der Erfindung werden im Folgenden anhand einiger Ausführungsbeispiele, auf die die Erfindung aber nicht beschränkt ist, aufgezeigt. Es zeigen:
- Fig. 1:: eine schematische Darstellung eines Abgassystems eines Verbrennungsmotors mit einer elektrischen Komponente und einem elektrischen Anschluss vor dem Zusammenbau,
- Fig. 2:: ein erstes Ausführungsbeispiel der Erfindung mit nicht kreisrundem Querschnitt von elektrischem Leiter und Durchführung,
- Fig. 3:: ein zweites Ausführungsbeispiel der Erfindung mit sechseckigem Querschnitt von elektrischem Leiter und Durchführung,
- Fig. 4:: ein weiteres Ausführungsbeispiel der Erfindung mit nach dem Prinzip von Nut und Feder zusammenwirkendem elektrischen Leiter und Durchführung,
- Fig. 5:: ein weiteres Ausführungsbeispiel der Erfindung mit Außenstruktur am elektrischen Leiter im Bereich der Durchführung,
- Fig. 6:: ein Ausführungsbeispiel einer Durchführung mit umlaufender Struktur,
- Fig. 7:: ein Ausführungsbeispiel eines elektrischen Leiters mit umlaufender Struktur passend zu der Durchführung nach Fig. 6,
- Fig. 8:: einen Längsschnitt durch ein weiteres Ausführungsbeispiel der Erfindung im Bereich der Durchführung,
- Fig. 9:: einen Querschnitt durch Fig. 8 entlang der Linie IX-IX,
- Fig. 10:: eine schematische Außenansicht eines Teils einer Durchführung gemäß Fig. 8 und
- Fig. 11:: eine schematische Ansicht eines elektrischen Anschlusses mit zusätzlichem Gegenhaltemittel.

Es sei darauf hingewiesen, dass die Figuren schematisch mit teilweise angedeuteter Perspektive sind und dabei nicht unbedingt maßstabgerecht die einzelnen Teile zeigen.

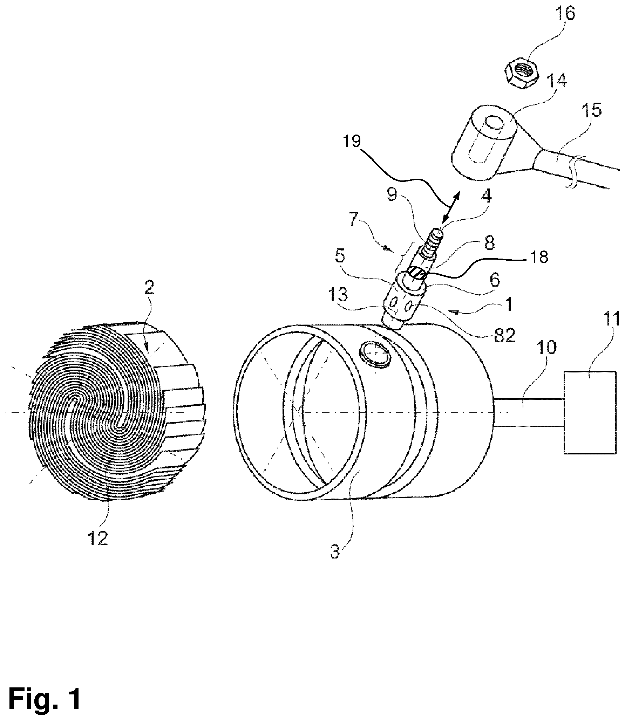

Fig. 1 zeigt einen elektrischen Anschluss 1 vor dem Einbau in einen Mantel 3 eines Abgassystems 10 eines Verbrennungsmotors 11 und vor Verbindung mit einer in dem Mantel 3 anzuordnenden elektrischen Komponente 2. Die elektrische Komponente 2 ist vorzugsweise ein elektrisch beheizbarer Wabenkörper 12, der nach seinem Einbau über einen elektrischen Leiter 4 mit Strom versorgt werden soll. Der elektrische Leiter 4 wird dazu durch eine Durchführung 5, von der er mittels einer Isolierschicht 6 elektrisch isoliert ist, durch den Mantel 3 geführt. Im Inneren wird der elektrische Leiter 4 mit der elektrischen Komponente 2 verbunden. Außen weist er einen Verbindungsabschnitt 7 auf, der eine Kontaktfläche 8 und in diesem Bereich (quer zur Längsrichtung 19) einen kreisrunden Querschnitt 18 aufweist. Der Verbindungsabschnitt 7 kann jedoch vorzugsweise leicht konisch geformt sein, so dass sich ein Anschlussstück 14 mit einer entsprechenden konischen Öffnung selbsthemmend auf den Verbindungsabschnitt 7 schieben lässt. Die Anpresskräfte im Bereich der Kontaktfläche 8 können durch das Festziehen einer Mutter 16 auf einem Außengewinde 9 erhöht und eingestellt werden bzw. durch das Festziehen einer nicht dargestellten Schraube in einem nicht dargestellten Innengewinde in dem elektrischen Leiter 4. Auf diese Weise kann eine Zuführleitung 15 sicher mit dem elektrischen Leiter 4 verbunden werden, so dass der elektrische Anschluss 1 Ströme von 30 und mehr Ampere, bis hin zu mehreren Hundert Ampere, aufnehmen kann. Während nach dem Stand der Technik ein solcher elektrischer Anschluss im Allgemeinen rotationssymmetrisch um eine geometrische Mittelachse 13 ausgebildet war, weist der erfindungsgemäße elektrische Anschluss 1 Mittel 82 zur Erhöhung des von der Durchführung 5 aufnehmbaren Drehmoments auf. Einzelne Ausführungsmöglichkeiten für solche Verdrehsicherungen sind in den folgenden Figuren beispielhaft dargestellt.

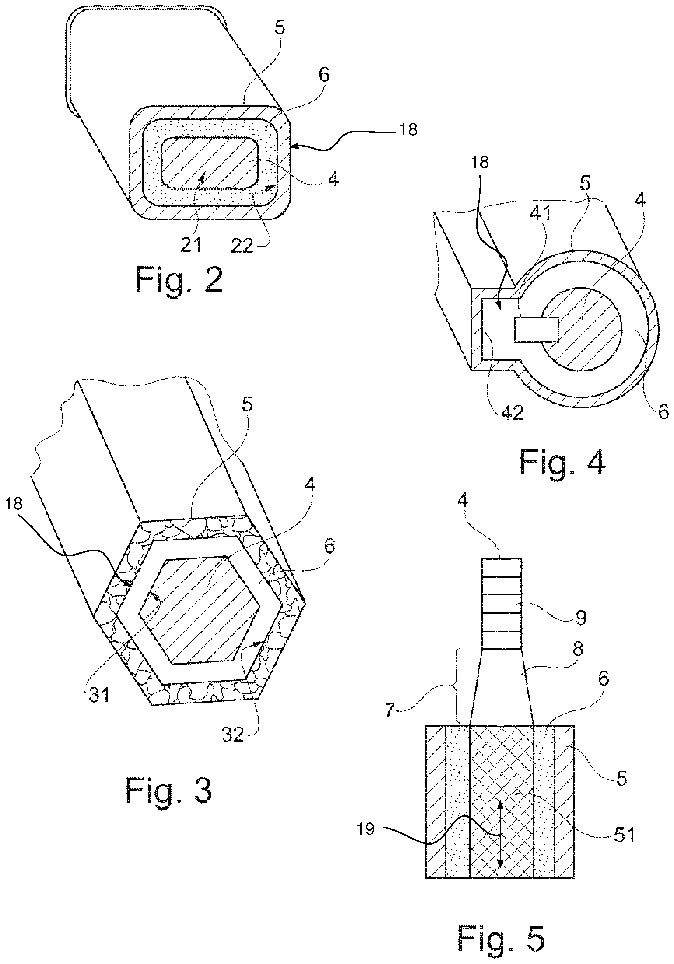

Fig. 2 zeigt die Möglichkeit, den elektrischen Leiter 4 mit einem im Bereich der Durchführung 5 von der Kreisform abweichenden Außenquerschnitt 21 zu gestalten, wobei vorzugsweise gleichzeitig auch der Innenquerschnitt 22 der Durchführung 5 in entsprechender Weise von der Kreisform abweicht. Die Isolierschicht 6, die vorzugsweise aus verpresstem Keramikpulver besteht, ist nahezu inkompressibel, so dass durch die gezeigte Formgebung von elektrischem Leiter 4 und Durchführung 5 ein Verdrehen des elektrischen Leiters 4 selbst bei sehr großen Drehmomenten praktisch ausgeschlossen ist.

Fig. 3 zeigt einen elektrischen Leiter 4 mit einem sechseckigen Außenquerschnitt 31 im Bereich der Durchführung 5, wobei die Durchführung 5 einen entsprechend angeordneten sechseckigen Innenquerschnitt 32 aufweist. Zwischen beiden ist wiederum eine Isolierschicht 6 angeordnet. Diese Figur ist beispielhaft für jede Art von vieleckigen Querschnitten 18, die alle die Verdrehsicherheit erhöhen.

Ein anderes Ausführungsbeispiel der Erfindung ist in Fig. 4 dargestellt, welche das Zusammenwirken einer Feder 41 an dem elektrischen Leiter 4 mit einer Nut 42 an der Innenseite der Durchführung 5 darstellt. Eine oder mehrere in Längsrichtung des elektrischen Leiters 4 verlaufende Verdrehsicherungen in Form von zusammenwirkender Nut 42 und Feder 41 erhöhen ebenfalls von der Durchführung 5 aufnehmbare Drehmomente.

Ein weiteres Ausführungsbeispiel der Erfindung ist in Fig. 5 dargestellt, die bei längs aufgeschnittener Durchführung 5 schematisch den elektrischen Leiter 4 mit seinen äußeren Eigenschaften zeigt. Erfindungsgemäß ist der Bereich des elektrischen Leiters 4 innerhalb der Durchführung 5 mit Strukturen 51 versehen, im vorliegenden Falle mit sich kreuzenden schräg verlaufenden Rippen. Diese Struktur 51 bewirkt eine wesentlich erhöhte Haftreibung zwischen elektrischem Leiter 4 und Isolierschicht 6, was eine erhöhte Verdrehsicherheit bedeutet. Fig. 5 zeigt auch den konischen Verbindungsabschnitt, der die Kontaktfläche 8 bereitstellt. Am Ende des elektrischen Leiters 4 ist ein Außengewinde 9 angedeutet.

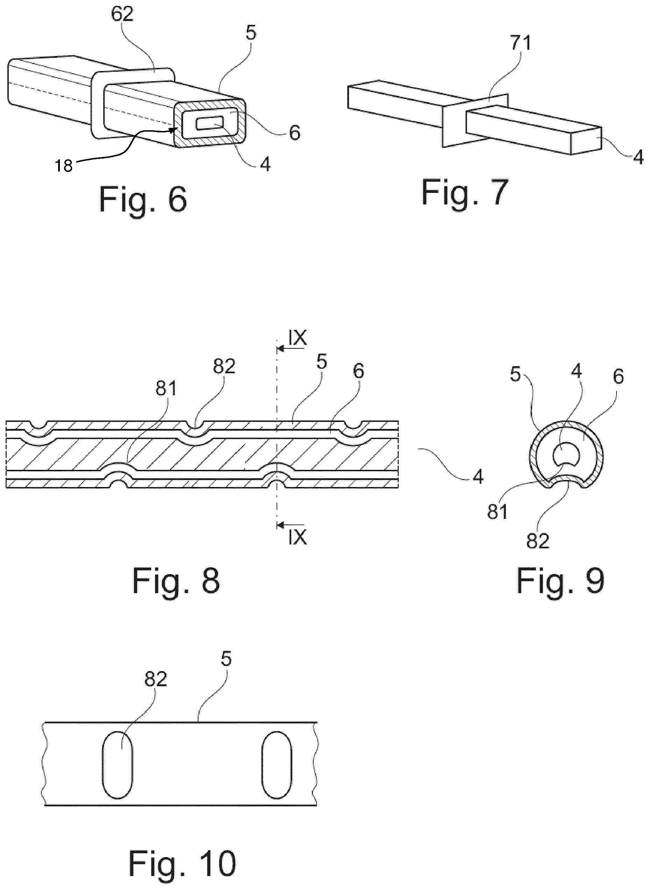

Ein weiteres wichtiges Ausführungsbeispiel der Erfindung ist in den Fig. 6 und 7 dargestellt, wobei es auf die genaue Querschnittsform der dargestellten Teile nicht unbedingt ankommt. Fig. 6 zeigt eine Durchführung, im vorliegenden Fall mit einem annähernd rechteckigen Querschnitt 18 mit einer zumindest innen umlaufenden Hohlstruktur 62, die im vorliegenden Fall jedoch auch außen sichtbar ist.

In Fig. 7 ist ein entsprechend gestalteter elektrischer Leiter 4 für die in Fig. 6 dargestellte Form der Durchführung 5 gezeigt. Dieser elektrische Leiter 4 hat eine außen umlaufende Wölbung 71, die mit der innen umlaufenden Hohlstruktur 62 zusammenwirken kann. Neben der durch die Querschnittsform schon gegebenen Verdrehsicherheit würde selbst bei runden Querschnittsformen das Zusammenwirken von außen umlaufender Wölbung 71 und innen umlaufender Hohlstruktur 62 eine zusätzliche Verdrehsicherung durch Erhöhung der Reibung mit der Isolierschicht 6 bewirken. Dazu kommt jedoch, dass die Gasdichtigkeit in der Durchführung 5 erhöht wird, weil eine oder möglicherweise auch mehrere aufeinanderfolgende umlaufende Wölbungen bzw. Hohlstrukturen eine Art Labyrinthdichtung bilden und zu einer zusätzlichen Pressung der Isolierschicht 6 führen, was beides vorteilhaft für die Gasdichtigkeit ist.

Die Fig. 8, 9 und 10 zeigen ein weiteres Ausführungsbeispiel der Erfindung, bei dem ein elektrischer Leiter 4 mit an sich kreisrundem Außenquerschnitt und eine Durchführung 5 mit ebenfalls kreisrundem Innenquerschnitt an mehreren Stellen durch Eindellungen 82 in der Durchführung 5 und entsprechend angeordnete Vertiefungen 81 im elektrischen Leiter 4 über die Isolierschicht quasi formschlüssig miteinander verbunden sind. Solche Eindellungen 82 und Vertiefungen 81 können an rotationssymmetrisch aufgebauten schon vorgefertigten Durchführungen 5 mit elektrischem Leiter 4 nachträglich von außen angebracht werden und erhöhen auf einfache Weise die Verdrehsicherheit.

Fig. 8 zeigt einen schematischen Längsschnitt durch eine solche Konfiguration, Fig. 9 einen schematischen Querschnitt entlang der Linie IX-IX durch Fig. 8 und Fig. 10 eine Ansicht von außen auf die Durchführung 5 im Bereich von Eindellungen 82.

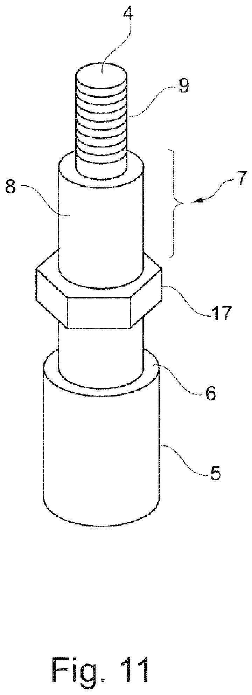

Fig. 11 zeigt eine weitere erfindungsgemäße Lösung zur Verhinderung des Verdrehens des elektrischen Leiters 4 und/oder der Isolierung 6 in der Durchführung 5. Ein Gegenhaltemittel 17, hier in Form eines sechskantigen Abschnitts des elektrischen Leiters 4, vorzugsweise eine aufgeschweißte Mutter, kann mittels eines Schraubenschlüssels Drehmomente aufnehmen, die einem am Verbindungsabschnitt 7 oder dem Innen- oder Außengewinde 9 angreifenden Drehmoment entgegenwirken. Ein solches Gegenhaltemittel 17 kann vorzugsweise im Durchmesser größere Abmessungen als der elektrische Leiter haben und eine Art Kragen mit einem für die elektrische Isolierung notwendigen Abstand von der Durchführung 5 bilden. Dies unterstützt im Betrieb die Wärmeabfuhr aus dem elektrischen Leiter und reduziert damit auch noch die Temperatur der Kontaktfläche 8 im Verbindungsabschnitt 7.

Die vorliegende Erfindung macht elektrische Anschlüsse für elektrische Komponenten in einem Abgassystem unempfindlicher gegen von außen aufgebrachte Drehmomente, was Montage, Wartung und Reparatur vereinfacht. Außerdem wird es möglich, auch empfindliche elektrische Komponenten in einem Abgassystem mit einem elektrischen Anschluss zu versehen bzw. elektrische Komponenten weniger widerstandsfähig gegen von außen nach innen übertragene Drehmomente zu gestalten. Dies erhöht die konstruktiven Möglichkeiten für preisgünstige elektrische Komponenten, insbesondere elektrisch beheizbare Wabenkörper in Abgasreinigungssystemen.

### Bezugszeichenliste

- 1: elektrischer Anschluss
- 2: elektrische Komponente
- 3: Mantel
- 4: elektrischer Leiter
- 5: Durchführung
- 6: Isolierschicht
- 7: Verbindungsabschnitt
- 8: Kontaktfläche
- 9: Innen- oder Außengewinde
- 10: Abgassystem
- 11: Verbrennungsmotor
- 12: Wabenkörper
- 13: geometrische Mittelachse
- 14: Anschlussstück
- 15: Zuführleitung
- 16: Mutter oder Schraube
- 17: Gegenhaltemittel
- 18: Querschnitt
- 19: Längsrichtung
- 21: von der Kreisform abweichender Außenquerschnitt
- 22: von der Kreisform abweichender Innenquerschnitt
- 31: vieleckiger Außenquerschnitt
- 32: vieleckiger Innenquerschnitt
- 41: Feder
- 42: Nut
- 51: Struktur
- 62: innen umlaufende Hohlstruktur
- 71: außen umlaufende Wölbung
- 81: Vertiefung
- 82: Eindellung

## Patentansprüche

1. Elektrischer Anschluss (1) für eine elektrische Komponente (2) in einem Abgassystem (10) eines Verbrennungsmotors (11), wobei das Abgassystem (10) einen metallischen Mantel (3) aufweist, durch den ein elektrischer Leiter (4) durch eine Isolierschicht (6) elektrisch isoliert mittels einer Durchführung (5) mit einer geometrischen Mittelachse (13) hindurchgeführt ist, und wobei der elektrische Leiter (4) zumindest einen im Querschnitt (18) kreisrunden, äußeren Verbindungsabschnitt (7) mit einer Kontaktfläche (8) zur Verbindung mit einem Anschlussstück (14) einer Zuführleitung (15) oder ein zur Mittelachse (13) der Durchführung (5) koaxiales Innen- oder Außengewinde (9) aufweist,
wobei zumindest die Durchführung (5) oder der elektrische Leiter (4) so gestaltet sind, dass sie zumindest an dem Verbindungsabschnitt (7) oder dem Innen- oder Außengewinde (9) in deren Umfangsrichtung angreifende Drehmomente von bis zu 8 Nm (Newtonmeter) aufnehmen können, wobei der elektrische Leiter (4) im Bereich der Durchführung (5) Sicherungselemente (21, 22; 31, 32; 41, 42; 51; 62, 71; 81, 82) zur Sicherung gegen Verdrehen aufweist und der elektrische Leiter (4) im Bereich der Durchführung (5) einen von der Kreisform abweichenden Außenquerschnitt (21) aufweist und die Durchführung (5) zumindest in ihrer Form oder inneren Oberflächenstruktur als Gegenstück zu dem entsprechenden Bereich des elektrischen Leiters (4) dient und von diesem durch eine keramische Isolierschicht (6) elektrisch isoliert ist.

2. Elektrischer Anschluss (1) für eine elektrische Komponente (2) in einem Abgassystem (10) eines Verbrennungsmotors (11), wobei das Abgassystem (10) einen metallischen Mantel (3) aufweist, durch den ein elektrischer Leiter (4) durch eine Isolierschicht (6) elektrisch isoliert mittels einer Durchführung (5) hindurchgeführt ist und wobei der elektrische Leiter (4) zumindest einen im Querschnitt (18) kreisrunden äußeren Verbindungsabschnitt (7) mit einer Kontaktfläche (8) zur Verbindung mit einem Anschlussstück (14) einer Zuführleitung (15) oder ein zur Mittelachse (13) der Durchführung (5) koaxiales Innen- oder Außengewinde (9) aufweist,
wobei zumindest die Durchführung (5) oder der elektrische Leiter (4) so gestaltet sind, dass sie zumindest an dem Verbindungsabschnitt (7) oder dem Innen- oder Außengewinde (9) in dessen Umfangsrichtung angreifende Drehmomente von bis zu 3,6 Nm (Newtonmeter) pro cm² (Quadratzentimeter) Kontaktfläche (8) aufnehmen können, wobei der elektrische Leiter (4) im Bereich der Durchführung (5) Sicherungselemente (21. 22: 31. 32: 41. 42: 51: 62. 71: 81. 82) zur Sicherung gegen Verdrehen aufweist und der elektrische Leiter (4) im Bereich der Durchführung (5) einen von der Kreisform abweichenden Außenquerschnitt (21) aufweist und die Durchführung (5) zumindest in ihrer Form oder inneren Oberflächenstruktur als Gegenstück zu dem entsprechenden Bereich des elektrischen Leiters (4) dient und von diesem durch eine keramische Isolierschicht (6) elektrisch isoliert ist.

3. Elektrischer Anschluss (1) nach einem der vorhergehenden Ansprüche, **dadurch gekennzeichnet, dass** der elektrische Leiter (4) im Bereich der Durchführung (5) außen eine seiner Längsrichtung (19) oder schräg dazu verlaufende Struktur (51) hat.

4. Elektrischer Anschluss (1) nach einem der vorhergehenden Ansprüche, **dadurch gekennzeichnet, dass** der elektrische Leiter (4) im Bereich der Durchführung (5) mindestens eine nach dem Prinzip Nut (42) und Feder (41) mit der Durchführung (5) zusammenwirkende Struktur (41, 42) in Längsrichtung aufweist.

5. Elektrischer Anschluss (1) nach einem der vorhergehenden Ansprüche, **dadurch gekennzeichnet, dass** der elektrische Leiter (4) im Bereich der Durchführung (5) mindestens eine in Umfangsrichtung verlaufende Struktur (71) zur Erhöhung der Gasdichtheit der Durchführung (5) aufweist.

6. Elektrischer Anschluss (1) nach einem der vorhergehenden Ansprüche, **dadurch gekennzeichnet, dass** der Verbindungsabschnitt (7) konisch gestaltet ist, so dass er mit einem entsprechend gestalteten Anschlussstück (14) selbsthemmend zusammengesteckt werden kann.

7. Elektrischer Anschluss (1) nach Anspruch 6 **dadurch gekennzeichnet, dass** der elektrische Leiter (4) oberhalb des konischen Verbindungsabschnitts (7) ein Außengewinde (9) aufweist, auf das eine Mutter (16) zum Festziehen des Anschlussstückes (14) gedreht werden kann.

8. Elektrischer Anschluss (1) nach Anspruch 6 **dadurch gekennzeichnet**, das der elektrische Leiter (4) ein Innengewinde (9) aufweist, in welches eine Schraube (16) zum Festziehen des Anschlussstückes (14) gedreht werden kann.

9. Elektrischer Anschluss nach einem der vorhergehenden Ansprüche, **dadurch gekennzeichnet, dass** der elektrische Leiter (4) Gegenhaltemittel (17) zum Aufbringen eines Gegendrehmomentes aufweist.

## Claims

1. Electrical connection (1) for an electrical component (2) in an exhaust gas system (10) of an internal combustion engine (11), wherein the exhaust gas system (10) has a metallic jacket (3), through which an electrical conductor (4) is passed through an insulating layer (6) in electrically insulated fashion by means of a bushing (5) with a geometric mid-axis (13), and wherein the electrical conductor (4) has at least one outer connecting section (7) which is circular in cross section (18) and has a contact area (8) for connection to a connection piece (14) of a feedline (15) or an inner or outer thread (9) which is coaxial to the mid-axis (13) of the bushing (5),
wherein at least the bushing (5) or the electrical conductor (4) are configured such that they can absorb torques of up to 8 Nm (newton meter) acting at least on the connecting section (7) or the inner or outer thread (9) in the circumferential direction thereof, wherein the electrical conductor (4) has securing elements (21, 22; 31, 32; 41, 42; 51; 62, 71; 81, 82) for securing against rotation in the region of the bushing (5) and the electrical conductor (4) has an outer cross section (21) deviating from the circular shape in the region of the bushing (5) and the bushing (5), at least in terms of its shape or inner surface structure, acts as mating piece to the corresponding region of the electrical conductor (4) and is electrically insulated therefrom by a ceramic insulating layer (6).

2. Electrical connection (1) for an electrical component (2) in an exhaust gas system (10) of an internal combustion engine (11), wherein the exhaust gas system (10) has a metallic jacket (3), through which an electrical conductor (4) is passed through an insulating layer (6) in electrically insulated fashion by means of a bushing (5), and wherein the electrical conductor (4) has at least one outer connecting section (7) which is circular in cross section (18) and has a contact area (8) for connection to a connection piece (14) of a feedline (15) or an inner or outer thread (9) which is coaxial to the mid-axis (13) of the bushing (5),
wherein
at least the bushing (5) or the electrical conductor (4) are configured such that they can absorb torques of up to 3.6 Nm (newton meters) per cm² (centimeters squared) of contact area (8) acting at least on the connecting section (7) or the inner or outer thread (9) in the circumferential direction thereof, wherein the electrical conductor (4) has securing elements (21, 22; 31, 32; 41, 42; 51; 62, 71; 81, 82) for securing against rotation in the region of the bushing (5) and the electrical conductor (4) has an outer cross section (21) deviating from the circular shape in the region of the bushing (5) and the bushing (5), at least in terms of its shape or inner surface structure, acts as mating piece to the corresponding region of the electrical conductor (4) and is electrically insulated therefrom by a ceramic insulating layer (6).

3. Electrical connection (1) according to one of the preceding claims, **characterized in that** the electrical conductor (4) has a structure (51) extending in the longitudinal direction (19) of the electrical conductor or at an angle thereto on the outside in the region of the bushing (5).

4. Electrical connection (1) according to one of the preceding claims, **characterized in that** the electrical conductor (4) has at least one structure (41, 42) in the longitudinal direction which interacts with the bushing (5) in accordance with the principle of groove (42) and tongue (41) in the region of the bushing (5).

5. Electrical connection (1) according to one of the preceding claims, **characterized in that** the electrical conductor (4) has at least one structure (71) extending in the circumferential direction for increasing the gas sealtightness of the bushing (5) in the region of the bushing (5).

6. Electrical connection (1) according to one of the preceding claims, **characterized in that** the connecting section (7) is configured to be conical so that it can be plugged together with a correspondingly configured connection piece (14) in self-locking fashion.

7. Electrical connection (1) according to Claim 6, **characterized in that** the electrical conductor (4) has an outer thread (9) above the conical connecting section (7), with it being possible for a nut (16) for tightening the connection piece (14) to be screwed onto said outer thread.

8. Electrical connection (1) according to Claim 6, **characterized in that** the electrical conductor (4) has an inner thread (9), into which a screw (16) for tightening the connection piece (14) can be screwed.

9. Electrical connection according to one of the preceding claims, **characterized in that** the electrical conductor (4) has opposing holding means (17) for applying a countertorque.

## Revendications

1. Borne électrique (1) pour un composant électrique (2) dans un système d'échappement (10) d'un moteur à combustion interne (11), le système d'échappement (10) possédant une enveloppe (3) métallique à travers laquelle un conducteur électrique (4) passe de manière électriquement isolée par une couche isolante (6) au moyen d'une traversée (5) ayant un axe central géométrique (13), et le conducteur électrique (4) possédant au moins une portion de liaison externe (7), circulaire dans sa section transversale (18), pourvue d'une surface de contact (8) destinée à la liaison avec une pièce de raccordement (14) d'une ligne d'arrivée (15) ou un filet intérieur ou extérieur (9) coaxial par rapport à l'axe central (13) de la traversée (5),
au moins la traversée (5) ou le conducteur électrique (4) étant configurés de telle sorte qu'ils peuvent supporter, au moins au niveau de la portion de liaison (7) ou du filet intérieur ou extérieur (9), des couples jusqu'à 8 Nm (Newton-mètre) appliqués dans leur sens périphérique, le conducteur électrique (4) possédant dans la zone de la traversée (5) des éléments de blocage (21, 22 ; 31, 32 ; 41, 42 ; 51 ; 62, 71 ; 81, 82) servant au blocage contre une torsion et le conducteur électrique (4) possédant dans la zone de la traversée (5) une section extérieure (21) différente de la forme circulaire et la traversée (5), au moins dans sa forme ou sa structure de surface intérieure, faisant office de pièce homologue pour la zone correspondante du conducteur électrique (4) et étant isolée électriquement de celui-ci par une couche isolante (6) en céramique.

2. Borne électrique (1) pour un composant électrique (2) dans un système d'échappement (10) d'un moteur à combustion interne (11), le système d'échappement (10) possédant une enveloppe (3) métallique à travers laquelle un conducteur électrique (4) passe de manière électriquement isolée par une couche isolante (6) au moyen d'une traversée (5), et le conducteur électrique (4) possédant au moins une portion de liaison externe (7), circulaire dans sa section transversale (18), pourvue d'une surface de contact (8) destinée à la liaison avec une pièce de raccordement (14) d'une ligne d'arrivée (15) ou un filet intérieur ou extérieur (9) coaxial par rapport à l'axe central (13) de la traversée (5),
au moins la traversée (5) ou le conducteur électrique (4) étant configurés de telle sorte qu'ils peuvent supporter, au moins au niveau de la portion de liaison (7) ou du filet intérieur ou extérieur (9), des couples jusqu'à 3,6 Nm (Newton-mètre) par cm² (centimètre carré) appliqués dans leur sens périphérique, le conducteur électrique (4) possédant dans la zone de la traversée (5) des éléments de blocage (21, 22 ; 31, 32 ; 41, 42 ; 51 ; 62, 71 ; 81, 82) servant au blocage contre une torsion et le conducteur électrique (4) possédant dans la zone de la traversée (5) une section extérieure (21) différente de la forme circulaire et la traversée (5), au moins dans sa forme ou sa structure de surface intérieure, faisant office de pièce homologue pour la zone correspondante du conducteur électrique (4) et étant isolée électriquement de celui-ci par une couche isolante (6) en céramique.

3. Borne électrique (1) selon l'une des revendications précédentes, **caractérisée en ce que** le conducteur électrique (4) possède à l'extérieur, dans la zone de la traversée (5), une structure (51) qui s'étend dans son sens longitudinal (19) ou en biais par rapport à celui-ci.

4. Borne électrique (1) selon l'une des revendications précédentes, **caractérisée en ce que** le conducteur électrique (4) possède, dans la zone de la traversée (5), au moins une structure (41, 42) dans le sens longitudinal qui coopère avec la traversée (5) selon le principe rainure (42) et languette (41).

5. Borne électrique (1) selon l'une des revendications précédentes, **caractérisée en ce que** le conducteur électrique (4) possède, dans la zone de la traversée (5), au moins une structure (71) qui s'étend dans le sens périphérique destinée à augmenter l'étanchéité au gaz de la traversée (5).

6. Borne électrique (1) selon l'une des revendications précédentes, **caractérisée en ce que** la portion de liaison (7) est de configuration conique, de sorte qu'elle peut s'accoupler de manière autobloquante avec une pièce de raccordement (14) conçue de manière correspondante.

7. Borne électrique (1) selon la revendication 6, **caractérisée en ce que** le conducteur électrique (4) possède au-dessus de la portion de liaison (7) conique un filet extérieur (9) sur lequel peut être vissé un écrou (16) en vue de serrer la pièce de raccordement (14).

8. Borne électrique (1) selon la revendication 6, **caractérisée en ce que** le conducteur électrique (4) possède un filet intérieur (9) dans lequel peut être vissé un boulon (16) en vue de serrer la pièce de raccordement (14).

9. Borne électrique (1) selon l'une des revendications précédentes, **caractérisée en ce que** le conducteur électrique (4) possède des moyens de maintien (17) destinés à appliquer un couple de maintien.
